# NOUVEAU FASCICULE DE BREVET EUROPEEN

(11) **EP 2 462 749 B2**
(45) Date de publication et mention de la décision concernant l'opposition: **30.08.2017**
(45) Mention de la délivrance du brevet: 12.03.2014
(21) Numéro de dépôt: 11741425.0
(22) Date de dépôt: 20.07.2011
(51) Int. Cl.: H04N 21/61, H04H 20/18

(54) **PROCEDE DE DIFFUSION DVB-T2 AVEC INSERTION DE CONTENU REGIONAL ET DISPOSITIF UTILISE DANS LE PROCEDE**
VERFAHREN FÜR DVB-T2-RUNDFUNK MIT EINFÜGUNG REGIONALER INHALTE UND IN DIESEM VERFAHREN VERWENDETE VORRICHTUNG
METHOD OF DVB-T2 BROADCASTING WITH INSERTION OF REGIONAL CONTENT AND DEVICE USED IN THE METHOD

(30) Priorité: 13.08.2010 FR 1056594
(43) Date de publication de la demande: 13.06.2012
(60) Demande divisionnaire: 13191980.5
(73) Titulaire: Enensys Technologies, 35000 Rennes (FR)
(72) Inventeur: LHERMITTE, Richard, F-35000 Rennes (FR); CHAUVIERE, Benoit, F-35740 Pace (FR); DENIAU, Eric, F-35190 La Baussaine (FR)
(74) Mandataire: Santarelli
(86) Numéro de dépôt international: PCT/EP2011/062484
(87) Numéro de publication internationale: WO 2012/019889

(56) Documents cités:
- WO-A1-2011//104142
- IRINI S RELJIN ET AL: "DVB standards development", TELECOMMUNICATION IN MODERN SATELLITE, CABLE, AND BROADCASTING SERVICES, 2009. TELSIKS '09. 9TH INTERNATIONAL CONFERENCE ON, IEEE, PISCATAWAY, NJ, USA, 7 octobre 2009 (2009-10-07), pages 263-272, XP031573513, ISBN: 978-1-4244-4382-6
- DVB ORGANIZATION: "cm1020 T2 Modulator Interface.pdf", DVB, DIGITAL VIDEO BROADCASTING, C/O EBU - 17A ANCIENNE ROUTE - CH-1218 GRAND SACONNEX, GENEVA - SWITZERLAND, 20 février 2009 (2009-02-20), XP017825914,
- ETSI TS 102 773 v1.1.1 (2009-09)

## Description

La présente invention concerne le domaine des procédés de diffusion de programmes télévisuels et les dispositifs utilisés dans de tels procédés. En particulier, l'invention propose un procédé de diffusion permettant la personnalisation de flux de programmes pour des zones de diffusions couvertes par un réseau d'émission sur une seule fréquence de modulation conformément à la norme DVB-T2 (Digital Video Broadcast - Terrestrial version 2 en anglais) la seconde version de la norme de diffusion vidéo terrestre.

Les réseaux de diffusion de services numériques sur une seule fréquence de modulation ou réseaux SFN (pour Single Frequency Network en anglais) se généralisent dans un certain nombre de systèmes de diffusion. On peut citer par exemple les normes de diffusion DVB-T (Digital Video Broadcasting - Terrestrial en anglais) : "ETSI EN 300 744 V1.5.1, Digital Video Broadcasting (DVB) ; DVB-H (Digital Video Broadcasting - Handheld en anglais) : "ETSI EN 302 304, DVB-H - Transmission System for Handheld Terminals" ; ou encore la norme chinoise DTMB (Digital Terrestrial Multimedia Broadcast en anglais) anciennement nommée DMB-T/H (Digital Multimedia Broadcast-Terrestrial/Handheld en anglais) qui utilisent de tels réseaux de diffusion SFN.

L'organisation DVB a maintenant normalisé une seconde version pour la diffusion de programmes télévisuels sur réseau terrestre, sous le nom de DVB-T2 ETSI EN302 755 V1.2.1, l'invention se place dans le cadre de cette norme.

Les réseaux SFN se caractérisent en ce que la diffusion des services est effectuée par l'émission d'un même flux de données par différents émetteurs sur une seule et même fréquence de modulation. De ce fait, il est nécessaire que ces différents émetteurs reçoivent exactement le même contenu et soient finement synchronisés entre eux pour éviter de générer des interférences dans les endroits se trouvant à la jonction des zones de couverture des différents émetteurs.

Cette synchronisation entre les différents émetteurs SFN peut, par exemple, être réalisée par l'insertion dans le flux distribué à ces émetteurs de paquets de synchronisation tels que les paquets T2-MI (T2-Modulator Interface MIP en anglais, et MIP pour Mega-frame Initialization Packet en anglais) de type DVB-T2 timestamp qui correspondent dans la norme DVB-T2 aux étiquettes temporelles (timestamp en anglais) utilisées dans les normes DVB-H et DVB-T. Ce mécanisme est décrit dans le document : « Digital Video Broadcasting (DVB); DVB mega-frame for Single Frequency Network (SFN) synchronization Modulator Interface (T2-MI) for a second génération digital terrestrial television broadcasting system (DVB-T2)» de l'ETSI (European Telecommunications Standards Institute en anglais) sous la référence ETSI TS 102 773 V1.1.1 (2009-09). Le point d'émission recevant le flux se synchronise alors sur le flux reçu, par exemple à l'aide de ces paquets T2-MI de type DVB-T2 timestamp. Nous appelons cette synchronisation du point d'émission sur le flux reçu entraînant la synchronisation entre eux de tous les points d'émission, la synchronisation SFN du point d'émission.

La diffusion SFN se caractérise par la définition de plaques SFN. Une plaque SFN est une zone géographique couverte par un ensemble d'émetteurs dont le nombre est supérieur ou égal à un. Ces émetteurs sont finement synchronisés et émettent exactement le même flux de données sur la même fréquence.

La diffusion d'un ensemble de programmes au sein d'un flux de données sur une zone géographique est typiquement organisée à partir d'un point central. La zone géographique couverte est typiquement composée d'une pluralité de plaques SFN. La pluralité de programmes diffusés comprend des programmes destinés à l'ensemble de la zone couverte et des programmes spécifiques à une région donnée. La région étant définie ici comme un ensemble, éventuellement unitaire, de plaques SFN au sein de la zone couverte par la diffusion et au sein de laquelle les programmes diffusés sont les mêmes. On parle couramment de programmes nationaux pour les programmes diffusés sur l'ensemble de la zone et de programmes régionaux pour les programmes diffusés uniquement sur une ou plusieurs régions.

La solution la plus simple pour diffuser ces programmes est de créer un flux par région. Ce flux est composé pour chaque région de l'ensemble des programmes nationaux et des programmes régionaux spécifiques de cette région. Ces différents flux sont alors émis depuis le point central d'émission et diffusés vers les régions concernées. Cette solution pose un premier problème qui tient à la duplication de la diffusion des programmes nationaux. En effet, le moyen de diffusion typique est le satellite, la solution décrite multiplie par le nombre de régions la diffusion des programmes nationaux alors qu'idéalement, une seule diffusion de ces programmes pourrait suffire. Or la bande passante satellite est coûteuse. Un second problème tient au fait que les programmes régionaux sont typiquement disponibles au niveau des régions. La création des différents flux nécessite donc de remonter ces flux régionaux au point central d'émission pour constituer les différents flux nécessaires.

L'invention vise à résoudre les problèmes précédents par un procédé de diffusion d'un ensemble de programmes, nationaux et régionaux ne nécessitant pas la duplication de la diffusion des programmes nationaux ni de remonter les programmes régionaux vers un point central. Ce procédé est basé sur la création de différents flux T2-MI utilisant la technologie des tunnels couches physiques définie dans la norme DVB-T2 et appelés PLP (Physical Layer Pipe en anglais), mécanisme décrit dans le document « Digital Video Broadcasting (DVB); Frame structure channel coding and modulation for a second génération digital terrestrial television broadcasting system (DVB-T2); ETSI EN 302 755 V1.1.1 (2009-09) ». Un flux T2-MI est dédié aux programmes nationaux. Des flux T2-MI sont créés pour les programmes régionaux. Les programmes nationaux destinés à être remplacés par des programmes régionaux sont isolés dans des tunnels spécifiques. Les durées de trames et la taille des blocs sont harmonisées entre les différents tunnels. Chaque émetteur reçoit d'une part le flux T2-MI national et au moins un flux T2-MI régional. Il dispose de moyens de remplacer au moins un tunnel du flux T2-MI national par un tunnel du flux T2-MI régional pour générer le flux T2-MI à émettre.

L'invention est définie par les revendication.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre une première solution connue pour diffuser des programmes nationaux et régionaux sur une zone géographique.
La Fig. 2 illustre une seconde solution connue pour diffuser des programmes nationaux et régionaux sur une zone géographique.
La Fig. 3 illustre un exemple d'architecture de diffusion selon l'invention.
La Fig. 4 illustre le procédé de diffusion selon l'invention.
La Fig. 5 illustre l'architecture d'un dispositif permettant l'échange de tunnels entre deux flux T2-MI reçus pour générer un flux T2-MI de sortie selon un exemple de réalisation de l'invention.
La Fig. 6 illustre le procédé de recomposition de flux T2-MI.

Différentes solutions peuvent déjà être mises en place pour faire de la régionalisation dans un système de diffusion numérique terrestre et principalement utilisant DVB-T2. Par contre, ces solutions ne sont pas optimisées.

Il existe principalement deux architectures connues, l'architecture centralisée, et l'architecture distribuée au niveau des régions.

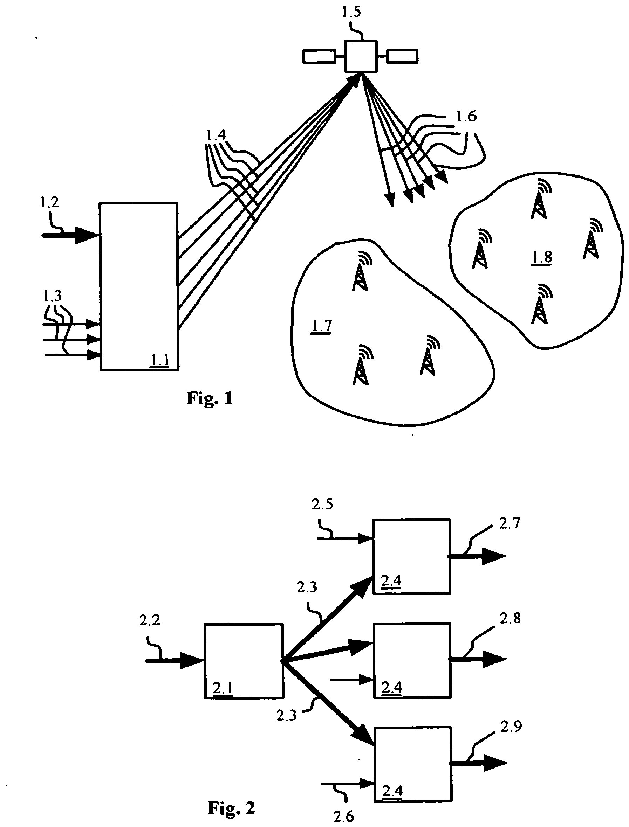

La première architecture est illustrée par la Fig. 1. C'est une architecture centralisée. Tous les contenus ou programmes sont agrégés au niveau d'un point central. Ce point central est appelé tête de réseau (headend en anglais). Chaque région doit donc transmettre vers la tête de réseau ses programmes régionaux afin que les différents flux régionaux soient créés au niveau de cette tête de réseau.

La tête de réseau comprend un dispositif 1.1, ou plutôt un ensemble de dispositifs, chargés de la création des flux. Ce dispositif reçoit en entrée d'une part un ensemble 1.2 de programmes dits nationaux, car ils sont destinés à être diffusés sur l'ensemble d'une zone représentant typiquement un pays. Il faut comprendre ici que l'on parle de programmes nationaux et de pays, mais qu'il s'agit uniquement, d'un point de vue technique, d'une zone de diffusion. Cette zone peut être plus limitée qu'un territoire national ou au contraire couvrir plusieurs pays partageant un même système de diffusion.

Le dispositif 1.1 reçoit également en entrée un ou plusieurs programmes régionaux 1.3. Ici encore, nous parlons de région qu'il faut comprendre au sens du brevet comme une zone unifiée de diffusion. C'est-à-dire, une zone où doit être diffusée un même ensemble de programmes.

Le dispositif crée un ensemble de flux 1.4. La norme DVB dans sa première version définit un format de flux de transport dit flux TS (Transport Stream en anglais), ce flux est directement constitué d'un multiplexe des différents programmes. La norme DVB dans sa version 2 définit un nouveau format de flux appelé flux T2-MI. Un flux T2-MI est constitué d'un ensemble de tunnels couches physiques isolés. Chaque tunnel contient un multiplexe de programmes correspondant à un flux TS au sens de la version 1 de la norme. Typiquement il est créé dans cette solution un flux T2-MI par région. Le flux T2-MI est donc composé des différents programmes devant être diffusés sur une région donnée. On a représenté sur la figure deux régions 1.7 et 1.8 chacune composée d'une plaque SFN. On doit comprendre qu'une région peut être composée d'une ou de plusieurs plaques SFN.

La diffusion intervient typiquement par satellite 1.5 qui retransmet les différents flux T2-MI 1.6 à destination des régions. La diffusion par satellite n'est qu'un exemple, tout autre moyen de diffusion pouvant être utilisé. Le satellite offre l'avantage de permettre une couverture large d'un ensemble d'émetteurs potentiellement nombreux et éloignés les uns des autres. Selon le territoire à couvrir il peut être envisagé une diffusion par fibre optique par exemple.

Chaque flux T2-MI, du fait qu'il doit comprendre l'ensemble des programmes destinés à une région donnée comprend d'une part l'ensemble des programmes nationaux qui doivent être diffusés partout et d'autre part l'ensemble des programmes régionaux destinés à la région visée. On constate aisément que la diffusion des programmes nationaux est dupliquée au sein de chacun des flux T2-MI créés. Cette duplication se révèle particulièrement préjudiciable dans le cas d'une diffusion par satellite du fait du coût de la bande passante.

Les programmes régionaux 1.3 des différentes régions doivent être disponibles au niveau de la tête de réseau 1.1. Il est donc nécessaire de transférer ce programme, typiquement créé au niveau régional, jusqu'à la tête de réseau centrale de la zone. Ce transfert est également coûteux.

La Fig. 2 illustre une autre architecture connue pour une diffusion de programmes DVB-T régionalisée. On retrouve une tête de réseau nationale 2.1 qui prend en entrée l'ensemble des programmes nationaux 2.2. Cette tête de réseau nationale génère un flux T2-MI 2.3 unique de programmes nationaux qui est alors diffusé vers les régions. Au niveau de chaque région, on retrouve au moins une tête de réseau régionale 2.4. Cette tête de réseau régionale reçoit en entrée d'une part le flux T2-MI de programmes nationaux 2.3, mais aussi un ou plusieurs programmes régionaux 2.5. La norme DVB-T2 permet l'ajout d'un ou plusieurs programmes supplémentaires à un flux T2-MI existant (Digital Video Broadcasting (DVB); Implementation guidelines for a second génération digital terrestrial television broadcasting system (DVB-T2); DVB Document A133 June 2010 20102010Ds 6.2.6 « The concept of a T2-system », in particular Figure 26: « Transmissions in a T2-system » and section 7.6tio « Regional/local content insertion »). Les programmes régionaux sont alors reçus typiquement sous la forme de flux de transport TS et non pas sous la forme de flux T2-MI. La tête de réseau régionale génère alors un flux T2-MI régional 2.7, 2.8 et 2.9, qui comprend les programmes nationaux et le ou les programmes régionaux spécifiques de la région visée. On remarque que cette architecture résout le problème de la remontée des programmes régionaux au niveau de la tête de réseau nationale. Par contre on remarque que les programmes nationaux sont diffusés une première fois entre la tête de réseau nationale et les têtes de réseau régionales. Ils sont diffusés une seconde fois au sein des flux T2-MI régionaux entre les têtes de réseau régionales et les différents émetteurs au sein de la région. Surtout que cette seconde diffusion nécessite souvent l'utilisation du satellite pour garantir l'accès aux nombreux émetteurs et réémetteurs d'une région, certains pouvant être difficiles à relier à un réseau câblé.

L'utilisation de cette architecture dans le cadre DVB-T2 est faite de la façon suivante. La tête de réseau régionale reçoit typiquement en entrée un flux T2-MI qui contient les programmes nationaux et, éventuellement dans des tunnels différents, les programmes destinés à être remplacés par du contenu régional. Ce contenu régional est typiquement reçu sous la forme de flux de transports (flux TS). Les données contenues dans les flux TS doivent alors être rassemblées pour former des paquets T2-MI devant être insérés en remplacement de blocs bandes de base du multiplexe T2-MI. Il s'agit ici de remultiplexer le flux T2-MI. Cette opération est faite en un seul point, la tête de réseau régionale, pour une plaque SFN donnée. En effet, elle est typiquement non déterministe et ne pourrait pas être faite simplement au niveau, par exemple, des émetteurs.

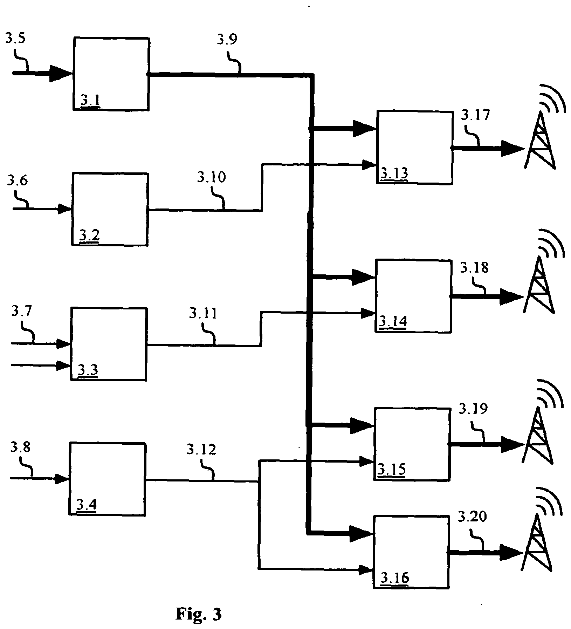

L'architecture selon l'invention est illustrée Fig. 3. On retrouve une tête de réseau nationale 3.1 qui, comme dans l'architecture précédente, reçoit en entrée un ensemble de programmes nationaux 3.5 et génère un flux T2-MI de programmes nationaux 3.9. On retrouve également des têtes de réseau régionales 3.2, 3.3 et 3.4 qui reçoivent des programmes régionaux 3.6, 3.7 et 3.8 qui génèrent des flux T2-MI régionaux 3.10, 3.11 et 3.12. Ces têtes de réseaux régionales sont avantageusement situées au sein de chaque région, mais elles peuvent être situées n'importe où sur le territoire. Ces différents flux T2-MI sont diffusés vers les émetteurs des différentes régions. Chaque émetteur est équipé d'un dispositif de recomposition de flux T2-MI selon l'invention 3.13, 3.14, 3.15 et 3.16 qui reçoit en entrée d'une part le flux T2-MI national et d'autre part le flux T2-MI régional correspondant à la région d'appartenance dudit émetteur. Ce dispositif de recomposition est chargé de remplacer au sein du flux T2-MI national reçu certains tunnels contenant des programmes par un ou plusieurs tunnels contenant des programmes régionaux reçus au sein du flux T2-MI régional. Il génère un flux T2-MI 3.17, 3.18, 3.19 et 3.20 qui comprend d'une part les programmes nationaux et d'autre part les programmes régionaux. Ces flux T2-MI sont directement émis par l'émetteur connecté au dispositif de recomposition de flux T2-MI.

On remarque que cette architecture nécessite une seule diffusion de chaque programme entre la tête de réseau concernée, nationale ou régionale, et l'émetteur final destiné à l'émission du multiplexe régional. Il permet également, par un placement avantageux des têtes de réseau régionales au sein des régions d'éviter une remontée des programmes régionaux au niveau de la tête de réseau nationale.

Cette architecture nécessite de prendre en compte certaines contraintes pour être fonctionnelle. Nous allons maintenant détailler ces contraintes, la conformance particulière des différents flux T2-MI et le fonctionnement détaillé du dispositif de recomposition des flux T2-MI.

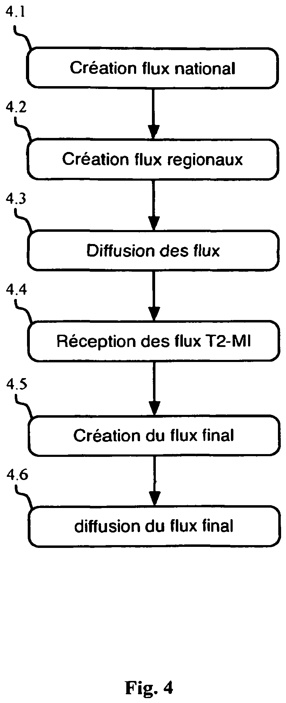

La Fig. 4 illustre le procédé de diffusion des programmes selon un exemple de réalisation de l'invention. Lors de l'étape 4.1, on génère le flux T2-MI national. Ce flux T2-MI intègre les programmes devant être diffusés sur l'ensemble du territoire. Ce flux T2-MI est conforme à la norme DVB-T2. En particulier il est fait usage de la technologie des tunnels couches physiques ou PLP. Ces tunnels ont été intégrés à la norme pour permettre de séparer dans un même multiplexe différents contenus. Typiquement ils permettent de différencier de la vidéo haute définition, de la vidéo classique ou de la radio. Les différents tunnels sont totalement indépendants et peuvent être diffusés selon des paramètres de diffusion tels que les paramètres de modulation. Le flux T2-MI peut comprendre plusieurs de ces tunnels prévus pour isoler la diffusion de chaque type de contenu en fonction de paramètres de diffusion qui lui sont adaptés.

L'invention utilise le mécanisme des tunnels pour toute autre chose. On prévoit d'isoler dans un tunnel du flux T2-MI national l'ensemble des programmes effectivement destinés à une diffusion nationale. On isole dans des tunnels spécifiques des programmes nationaux qui vont pouvoir être remplacés dans au moins une région par un programme régional. Schématiquement, on retrouve donc dans le flux T2-MI national un « gros » tunnel qui contient les programmes effectivement diffusés dans toutes les régions et une pluralité de « petits » tunnels isolant chaque programme pouvant être remplacé dans au moins une région.

Avantageusement, on crée au sein du flux T2-MI national au besoin, des tunnels « vides » qui ne sont créés que pour être remplacés par des programmes régionaux. Ces tunnels sont dimensionnés pour correspondre au tunnel contenant le programme de remplacement. Les blocs sont alors, par exemple, remplis de données de bourrage.

Lors d'une étape 4.2, les têtes de réseau régionales constituent les flux T2-MI comprenant le ou les programmes spécifiques d'une région donnée. Chaque programme est isolé dans un tunnel particulier. Il est important ici de paramétrer le flux T2-MI d'une manière qui soit compatible avec le flux T2-MI national. En particulier, un flux selon la norme DVB-T2 définit des trames (T2Frame selon le vocabulaire de la norme) dotées d'une période de trame, cette période de trame doit être identique à celle qui est choisie pour le flux T2-MI national. De même, les tunnels sont transportés au sein des trames sous la forme de blocs de données (Base Band Frame selon le vocabulaire de la norme) dont la taille est paramétrable. Il est nécessaire que la taille des blocs des flux T2-MI régionaux soit identique à celle paramétrée pour le flux T2-MI national. Nous reviendrons en détail sur ce point lors de la description du dispositif de recomposition de flux T2-MI.

Lors de l'étape 4.3, le flux T2-MI national et les différents flux T2-MI régionaux sont diffusés à destination des émetteurs des différentes régions. Cette diffusion peut être faite par tout canal de diffusion comme le satellite qui permet de couvrir facilement une grande zone ou encore un réseau par fibre optique. Le but est ici d'amener le flux T2-MI national et le flux T2-MI régional concerné à chaque émetteur au sein d'une région.

Lors de l'étape 4.4, les deux flux T2-MI, le national et le régional concernés, sont reçus au niveau de chaque émetteur par un dispositif de recomposition de flux T2-MI.

Lors de l'étape 4.5, le dispositif de recomposition des flux T2-MI génère le flux T2-MI final en remplaçant au sein du flux T2-MI national un ou plusieurs programmes nationaux par un ou plusieurs programmes régionaux reçus au sein du flux T2-MI régional. L'unité de remplacement est ici le tunnel couche physique ou PLP. Le remplacement s'effectue sur la base du remplacement des blocs composant un tunnel du flux T2-MI national par les blocs d'un autre tunnel du flux T2-MI régional. Cette opération étant faite au niveau de chaque émetteur d'une même zone SFN, il est primordial que les flux T2-MI générés soient parfaitement synchronisés et que les données qui les composent soient parfaitement les mêmes à l'octet près.

Ce flux T2-MI final est alors diffusé par les émetteurs.

De cette manière, chaque programme n'est diffusé qu'une fois entre la tête de réseau qui le gère, nationale ou régionale, et les émetteurs finaux.

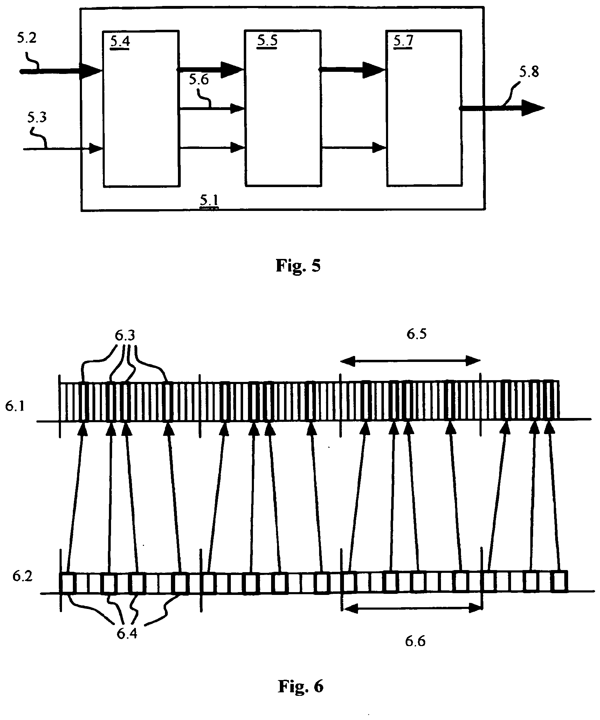

Le dispositif de recomposition de flux T2-MI 5.1 est illustré par la Fig. 5. Il reçoit en entrée un flux T2-MI national 5.2 et un flux T2-MI régional 5.3. Un premier étage 5.4 vise à synchroniser parfaitement les deux flux T2-MI. Ces flux T2-MI sont au format DVB-T2 appelé T2-MI. L'étage 5.4 commence par lire les informations de configuration contenues dans les paquets T2-MI. Il récupère les deux flux T2-MI et analyse les trames et blocs. Il utilise ensuite les informations temporelles du flux T2-MI, en particulier les étiquettes temporelles (timestamp en anglais), pour déterminer les numéros de trames à synchroniser. Ces informations 5.6 sont passées à l'étage de synchronisation 5.5. Celui-ci effectue alors la synchronisation des trames et l'identification des numéros de trame. L'étage 5.7 effectue le remplacement proprement dit des blocs pour générer le flux T2-MI final 5.8. Ce flux T2-MI final est synchronisé sur le flux T2-MI national reçu. La synchronisation peut être faite, par exemple, selon le mode de réalisation décrit dans la demande de brevet français publiée sous le numéro FR2932037.

Le remplacement effectif des blocs se fait dans l'exemple de réalisation de l'invention tel qu'illustré par la Fig. 6. Le flux T2-MI 6.1 représente le flux T2-MI national, tandis que le flux T2-MI 6.2 représente le flux T2-MI régional. On remarque que les deux flux T2-MI ont la même durée de trame 6.5, 6.6 et sont parfaitement synchronisés au niveau de ces trames. Chaque trame transporte des blocs bandes de base, chaque bloc appartenant à l'un des tunnels. Tous les blocs ont la même taille, la prise en compte de la taille des différents tunnels transportés étant faite par le nombre de blocs au sein de la trame pour chaque tunnel. Les bloc 6.4 du tunnel contenant le programme de remplacement au sein du flux T2-MI régional viennent remplacer les blocs 6.3 du programme à remplacer au sein du flux T2-MI national.

La configuration des dispositifs de recomposition de flux T2-MI est faite grâce à l'extension du protocole T2-MI. Cela permet de garder le flux transmis totalement compatible avec la norme DVB-T2 mais d'utiliser une extension de ce protocole pour acheminer des informations spécifiques à la régionalisation. Ces informations comprennent la désignation des services à remplacer par exemple. La configuration de régionalisation est effectuée typiquement au niveau de la tête de réseau régionale. Mais il est tout aussi envisageable de faire cette configuration au niveau de la tête de réseau nationale car dans tous les cas le protocole T2-MI est utilisé.

Il est à noter que tant le procédé de diffusion que le fonctionnement du dispositif de recomposition de flux T2-MI ne nécessitent aucun mécanisme propriétaire. Ils sont implémentés en utilisant astucieusement les mécanismes offerts par la norme. Certains de ces mécanismes, comme les tunnels couches physiques, sont détournés de leur fonction première.

Cette méthode de remplacement bloc avec synchronisation issue des informations temporelles et des numéros de trame est alors déterministe. Ce qui n'est pas le cas lorsque les contenus régionaux sont reçus sous la forme de flux TS qui doivent être remultiplexés dans un flux T2-MI existant. Grâce à ce déterminisme, tous les dispositifs de recomposition de flux T2-MI d'une même région génèrent exactement le même signal ce qui permet de garantir la non-perturbation du signal SFN.

## Revendications

1. Procédé de diffusion de programmes télévisuels selon la norme DVB_T2, la diffusion devant couvrir une zone de diffusion, la zone de diffusion comprenant un ensemble de plaques de diffusion couvertes par un ensemble d'émetteurs finement synchronisés et émettant sur la même fréquence, certains programmes étant destinés à être diffusés sur l'ensemble de la zone sont appelés programmes nationaux, la zone de diffusion comprenant un ensemble de régions au sein desquelles les programmes diffusés sont les mêmes, une région étant constituée d'au moins une plaque de diffusion, certains programmes étant destinés à être diffusés sur une ou plusieurs régions seulement sont appelés programmes régionaux, **caractérisé en ce qu'**il comporte les étapes suivantes :
- une étape (E4.1) de génération d'un flux T2-MI national contenant les programmes nationaux, les programmes nationaux destinés à être remplacés étant isolés au sein d'un ou plusieurs tunnels couches physiques le flux T2-MI national étant constitué de trames constituées de blocs bandes de bases;
- une étape (E4.2) de génération d'un ou plusieurs flux T2-MI régionaux contenant les programmes régionaux, chaque flux T2-MI régional contenant les programmes régionaux spécifiques d'une région, lesdits programmes régionaux étant isolés au sein d'un tunnel couche physique, le ou les flux T2-MI régionaux étant constitués de trames de durées identiques aux trames du flux T2-MI national, les blocs bandes de bases des trames constituant le ou les flux T2-MI régionaux étant de taille identique à la taille des blocs de bandes de base des trames constituant le flux T2-MI national ;
- une étape (E4.3) de diffusion du flux T2-MI national et d'au moins un flux T2-MI régional à destination de chaque émetteur (3.13, 3.14, 3.15, 3.16) de la zone de diffusion ;
- une étape (4.5) de recomposition de flux T2-MI, au niveau de chaque émetteur, pour remplacer les blocs bandes de base d'au moins un tunnel couche physique du flux T2-MI national par les blocs bandes de base d'un tunnel couche physique du flux T2-MI régional, pour générer le flux T2-MI final devant être émis par ledit émetteur.

2. Procédé de diffusion selon la revendication 1, **caractérisé en ce que** le flux T2-MI national est généré par une tête de réseau nationale et les flux T2-MI régionaux par des têtes de réseau régionales disposées au sein des régions.

3. Procédé de diffusion selon l'une des revendications 1 à 2, **caractérisé en ce que** l'étape de recomposition de flux T2-MI est configurée à l'aide d'informations de configuration transmises au sein d'au moins un flux T2-MI reçu à l'aide de l'extension du protocole T2-MI

4. Système de diffusion et de recomposition de programmes télévisuels selon la norme DVB_T2, la diffusion devant couvrir une zone de diffusion, la zone de diffusion comprenant un ensemble de plaques de diffusion couvertes par un ensemble d'émetteurs finement synchronisés et émettant sur la même fréquence, certains programmes étant destinés à être diffusés sur l'ensemble de la zone sont appelés programmes nationaux, la zone de diffusion comprenant un ensemble de régions au sein desquelles les programmes diffusés sont les mêmes, une région étant constituée d'au moins une plaque de diffusion, certains programmes étant destinés à être diffusés sur une ou plusieurs régions seulement sont appelés programmes régionaux, **caractérisé en ce qu'**il comporte:
- des moyens (3.1) de génération d'un flux T2-MI national contenant les programmes nationaux, les programmes nationaux destinés à être remplacés étant isolés au sein d'un ou plusieurs tunnels couches physiques le flux T2-MI national étant constitué de trames constituées de blocs bandes de bases;
- des moyens (3.2, 3.3, 3.4) de génération d'un ou plusieurs flux T2-MI régionaux contenant les programmes régionaux, chaque flux T2-MI régional contenant les programmes régionaux spécifiques d'une région, lesdits programmes régionaux étant isolés au sein d'un tunnel couche physique, le ou les flux T2-MI régionaux étant constitués de trames de durées identiques aux trames du flux T2-MI national, les blocs bandes de bases des trames constituant le ou les flux T2-MI régionaux étant de taille identique à la taille des blocs de bandes de base des trames constituant le flux T2-MI national ;
- des moyens (3.1, 3.2, 3.3, 3.4) de diffusion du flux T2-MI national et d'au moins un flux T2-MI régional à destination de chaque émetteur de la zone de diffusion ;
- des moyens (3.13, 3.14, 3.15, 3.16) de recomposition de flux T2-MI, au niveau de chaque émetteur, pour remplacer les blocs bandes de base d'au moins un tunnel couche physique du flux T2-MI national par les blocs bandes de base d'un tunnel couche physique du flux T2-MI régional, pour générer le flux T2-MI final devant être émis par ledit émetteur.

5. Système de diffusion et de recomposition de flux T2-MI selon la revendication 4, **caractérisé en ce qu'**il comprend des moyens de recevoir des informations de configuration contenues dans au moins un des flux T2-MI reçus à l'aide de l'extension du protocole T2-MI.

## Patentansprüche

1. Verfahren zur Ausstrahlung von Fernsehprogrammen gemäß dem DVB-T2-Standard, wobei die Ausstrahlung ein Ausstrahlungsgebiet abdecken soll, wobei das Ausstrahlungsgebiet eine Einheit von Ausstrahlungsflachen enthält, die von einer Einheit von Sendern abgedeckt werden, die fein synchronisiert sind und auf der gleichen Frequenz senden, wobei bestimmte Programme, die dazu bestimmt sind, im gesamten Gebiet ausgestrahlt zu werden, nationale Programme genannt werden, wobei das Ausstrahlungsgebiet eine Einheit von Regionen enthalt, innerhalb derer die ausgestrahlten Programme die gleichen sind, wobei eine Region aus mindestens einer Ausstrahlungsflache besteht, wobei bestimmte Programme, die dazu bestimmt sind, nur in einer oder mehreren Regionen ausgestrahlt zu werden, regionale Programme genannt werden, **dadurch gekennzeichnet, dass** es die folgenden Schritte aufweist:
- einen Schritt (E4.1) der Erzeugung eines nationalen T2-MI-Stroms, der die nationalen Programme enthalt, wobei die nationalen Programme, die ersetzt werden sollen, innerhalb eines oder mehrerer Physical Layer Pipes isoliert sind, wobei der nationale T2-MI-Strom aus Rahmen besteht, die aus Basisbandblöcken bestehen;
- einen Schritt (E4.2) der Erzeugung eines oder mehrerer regionaler T2-MIStröme, die die regionalen Programme enthalten, wobei jeder regionale T2-MIStrom die spezifischen regionalen Programme einer Region enthalt, wobei die regionalen Programme innerhalb einer Physical Layer Pipe isoliert sind, wobei der oder die regionalen T2-MI-Ströme aus Rahmen gleicher Dauer wie die Rahmen des nationalen T2-MI-Stroms bestehen, wobei die Basisbandblöcke der Rahmen, die den oder die regionalen T2-MI-Ströme bilden, die gleiche Größe wie die Größe der Basisbandblöcke der Rahmen haben, die den nationalen T2-MI-Strom bilden;
- einen Schritt (E4.3) der Ausstrahlung des nationalen T2-MI-Stroms und mindestens eines regionalen T2-MI-Stroms an jeden Sender (3.13, 3.14, 3.15, 3.16) des Ausstrahlungsgebiets;
- einen Schritt (4.5) der Wiederzusammensetzung von T2-MI-Strömen im Bereich jedes Senders, um die Basisbandblöcke mindestens einer Physical Layer Pipe des nationalen T2-MI-Stroms durch die Basisbandblöcke einer Physical Layer Pipe des regionalen T2-MI-Stroms zu ersetzen, um den vom Sender zu sendenden endgültigen T2-MI-Strom zu erzeugen.

2. Ausstrahlungsverfahren nach Anspruch 1, **dadurch gekennzeichnet, dass** der nationale T2-MI-Strom von einer nationalen Kopfstation erzeugt wird und die regionalen T2-MI-Ströme von regionalen Kopfstationen erzeugt werden, die innerhalb der Regionen angeordnet sind.

3. Ausstrahlungsverfahren nach einem der Ansprüche 1 bis 2, **dadurch gekennzeichnet, dass** der Schritt der Wiederzusammensetzung eines T2-MI-Stroms mit Hilfe von Konfigurationsinformationen konfiguriert wird, die innerhalb mindestens eines T2-MI-Stroms übertragen werden, der mit Hilfe der Erweiterung des T2-MI-Protokolls empfangen wird.

4. System zur Ausstrahlung und Wiederzusammensetzung von Fernsehprogrammen gemäß dem DVB-T2-Standard, wobei die Ausstrahlung ein Ausstrahlungsgebiet abdecken soll, wobei das Ausstrahlungsgebiet eine Einheit von Ausstrahlungsflachen enthalt, die von einer Einheit von fein synchronisierten und auf der gleichen Frequenz sendenden Sendern abgedeckt werden, wobei bestimmte Programme, die dazu bestimmt sind, im gesamten Gebiet ausgestrahlt zu werden, nationale Programme genannt werden, wobei das Ausstrahlungsgebiet eine Einheit von Regionen enthalt, innerhalb derer die ausgestrahlten Programme die gleichen sind, wobei eine Region aus mindestens einer Ausstrahlungsflache besteht, wobei bestimmte Programme, die dazu bestimmt sind, nur in einer oder mehreren Regionen ausgestrahlt zu werden, regionale Programme genannt werden, **dadurch gekennzeichnet, dass** es aufweist:
- Einrichtungen (3.1) zur Erzeugung eines nationalen T2-MI-Stroms, der die nationalen Programme enthalt, wobei die zu ersetzenden nationalen Programme innerhalb eines oder mehrerer Physical Layer Pipes isoliert sind, wobei der nationale T2-MI-Strom aus Rahmen besteht, die aus Basisbandblöcken bestehen;
- Einrichtungen (3.2, 3.3, 3.4) zur Erzeugung eines oder mehrerer regionaler T2-MI-Ströme, die die regionalen Programme enthalten, wobei jeder regionale T2-MI-Strom die spezifischen regionalen Programme einer Region enthalt, wobei die regionalen Programme innerhalb einer Physical Layer Pipe isoliert sind, wobei der oder die regionalen T2-MI-Ströme aus Rahmen gleicher Dauer wie die Rahmen des nationalen T2-MI-Stroms bestehen, wobei die Basisbandblöcke der Rahmen, die den oder die regionalen T2-MI-Ströme bilden, die gleiche Größe wie die Basisbandblöcke der Rahmen haben, die den nationalen T2-MI-Strom bilden;
- Einrichtungen (3.1, 3.2, 3.3, 3.4) zur Ausstrahlung des nationalen T2-MIStroms und mindestens eines regionalen T2-MI-Stroms an jeden Sender des Ausstrahlungsgebiets;
- Einrichtungen (3.13, 3.14, 3.15, 3.16) zur Wiederzusammensetzung eines T2-MI-Stroms im Bereich jedes Senders, um die Basisbandblöcke mindestens einer Physical Layer Pipe des nationalen T2-MI-Stroms durch die Basisbandblöcke einer Physical Layer Pipe des regionalen T2-MI-Stroms zu ersetzen, um den endgültigen T2-MI-Strom zu erzeugen, der vom Sender zu senden ist.

5. System zur Ausstrahlung und Wiederzusammensetzung von T2-MI-Strömen nach Anspruch 4, **dadurch gekennzeichnet, dass** es Einrichtungen enthält, um Konfigurationsinformationen zu empfangen, die in mindestens einem der mit Hilfe der Erweiterung des T2-MI-Protokolls empfangenen T2-MI-Ströme enthalten sind.

## Claims

1. Method of broadcasting television programmes according to the DVB-T2 standard, the broadcasting having to cover a broadcasting zone, the broadcasting zone comprising a set of broadcasting areas covered by a set of finely synchronized transmitters transmitting on the same frequency, some programmes being intended to be broadcast over the whole of the zone are called national programmes, the broadcasting zone comprising a set of regions within which the programmes broadcast are the same, a region consisting of at least one broadcasting area, some programmes being intended to be broadcast over one or more regions only are called regional programmes, **characterized in that** it includes the following steps:
- a step (E4.1) of generating a national T2-MI stream containing the national programmes, the national programmes intended to be replaced being isolated within one or more physical layer pipes, the national T2-MI stream consisting of frames consisting of baseband blocks;
- a step (E4.2) of generating one or more regional T2-MI streams containing the regional programmes, each regional T2-MI stream containing the regional programme specific to a region, said regional programmes being isolated within a physical layer pipe, the regional T2-MI stream or streams consisting of frames of durations identical to the frames of the national T2-MI stream, the baseband blocks of the frames making up the regional T2-MI stream or streams being identical in size to the size of the baseband blocks of the frames making up the national T2-MI stream;
- a step (4.3) of broadcasting the national T2-MI stream and at least one regional T2-MI stream intended for each transmitter (3.13, 3.14, 3.15, 3.16) in the broadcasting zone;
- a step (4.5) of T2-MI stream recomposition, at each transmitter, to replace the base band blocks of at least one physical layer pipe of the national T2-MI stream with baseband blocks of a physical layer pipe of the regional T2-MI stream in order to generate the final T2-MI stream to be transmitted by said transmitter.

2. Broadcasting method according to claim 1, **characterized in that** the national T2-MI stream is generated by a national head end and the regional T2-MI streams by regional head ends positioned within the regions.

3. Broadcasting method according to one of claims 1 to 2, **characterized in that** the T2-MI stream recomposition step is configured by means of configuration information transmitted within at least one T2-MI stream received by means of the T2-MI protocol extension.

4. System for broadcasting and recomposing television programmes according to the DVB-T2 standard, the broadcasting having to cover a broadcasting zone, the broadcasting zone comprising a set of broadcasting are as covered by a set of finely synchronized transmitters transmitting on the same frequency, some programmes being intended to be broadcast over the whole of the zone are called national programmes, the broadcasting zone comprising a set of regions within which the programmes broadcast are the same, a region consisting of at least one broadcasting area, some programmes being intended to be broadcast over one or more regions only are called regional programmes, **characterized in that** it includes:
- means (3.1) for generating a national T2-MI stream containing the national programmes, the national programmes intended to be replaced being isolated within one or more physical layer pipes, the national T2-MI stream consisting of frames consisting of baseband blocks;
- means (3.2, 3.3, 3.4) for generating one or more regional T2-MI streams containing the regional programmes, each regional T2-MI stream containing the regional programme specific to a region, said regional programmes being isolated within a physical layer pipe, the regional T2-MI stream or streams consisting of frames of durations identical to the frames of the national T2-MI stream, the baseband blocks of the frames making up the regional T2-MI stream or streams being identical in size to the size of the baseband blocks of the frames making up the national T2-MI stream;
- means (3.1, 3.2, 3.3, 3.4) for broadcasting the national T2-MI stream and at least one regional T2-MI stream intended for each transmitter in the broadcasting zone;
- means (3.13, 3.14, 3.15, 3.16) for T2-MI stream recomposition, at each transmitter, to replace the baseband blocks of at least one physical layer pipe of the national T2-MI stream with baseband blocks of a physical layer pipe of the regional T2-MI stream in order to generate the final T2-MI stream to be transmitted by said transmitter.

5. T2-MI stream broadcasting and recomposition system according to claim 4, **characterized in that** it comprises means for receiving configuration information contained in at least one of the T2-MI streams received by means of the T2-MI protocol extension.
